# EUROPÄISCHE PATENTSCHRIFT

(11) **EP 3 937 834 B1**
(45) Veröffentlichungstag und Bekanntmachung des Hinweises auf die Patenterteilung: **09.08.2023**
(21) Anmeldenummer: 20714139.1
(22) Anmeldetag: 11.03.2020
(51) Int. Cl.: A61C 8/00

(54) **ABFORMEINRICHTUNG FÜR EIN DENTALIMPLANTAT**
IMPRESSION COPING FOR A DENTAL IMPLANT
DISPOSITIF D'EMPREINTE POUR IMPLANT DENTAIRE

(30) Priorität: 12.03.2019 DE 102019203348
(43) Veröffentlichungstag der Anmeldung: 19.01.2022
(73) Patentinhaber: Übermuth, Tim, 29221 Celle (DE)
(72) Erfinder: Übermuth, Tim, 29221 Celle (DE)
(74) Vertreter: Baur & Weber Patentanwälte PartG mbB
(86) Internationale Anmeldenummer: PCT/EP2020/056501
(87) Internationale Veröffentlichungsnummer: WO 2020/182882

(56) Entgegenhaltungen:
- CN-U- 204 364 149
- US-A- 5 882 200
- US-B1- 6 213 773

## Beschreibung

Die Erfindung betrifft eine Abformeinrichtung für ein Dentalimplantat nach dem Oberbegriff des Anspruchs 1.

Eine derartige Abformeinrichtung umfasst eine Abformkappe, die eine entlang einer Längsachse erstreckte, erste Verbindungsöffnung und einen ersten Verbindungsabschnitt aufweist, und ein Konnektorelement zum Festlegen der Abformkappe relativ zu dem Dentalimplantat.

Zum Beispiel zur Bereitstellung eines Zahnersatzes für einen zahnlosen Kiefer werden Zahnersatzstrukturen in Form von Prothesen verwendet, die über in einen Kieferknochen eingesetzte, sogenannte osseointegrierte Implantate mit dem Kieferknochen verbunden werden. Derartige starre Verankerungen der Prothese mit dem Kieferknochen haben sich als vorteilhaft gegenüber einer lediglich parodontalen Lagerung von Zahnersatzstrukturen erwiesen.

Zur Befestigung einer Prothese an einem Kieferknochen eines Patienten werden herkömmlich zunächst Implantate im Rahmen eines chirurgischen Eingriffs in den Kieferknochen eingesetzt. Nach Einheilen der Implantate wird Nähte der Sitz der Implantate im Kieferknochen überprüft. Anschließend wird eine Abformung der Implantatpositionen vorgenommen, und zur Befestigung der endgültigen Prothese erforderliche, verbindende Teile werden als Patrizen an den Implantaten angeordnet. Die Patrizen können als so genannte Teleskopkronen gefertigt, aber auch in einen die Implantate miteinander verbindenden (primär verblockenden) Steg integriert sein. Abschließend wird der endgültige Zahnersatz als Prothese im Sinne einer Matrize individuell angefertigt, den Patrizen angepasst und am Patienten anprobiert.

Eine Abformeinrichtung der hier beschriebenen Art betrifft jedoch nicht nur einen Zahnersatz bei zahnlosen Patienten, sondern allgemein jede implantatversorgte Situation in der implantatprothetischen Versorgung. Eine Abformung kann in diesem Zusammenhang nicht nur zur Fertigung einer Prothese, sondern auch für Einzelzahnsituationen (Kronen) und Versorgungen ab zwei Implantaten (Brücken) dienen.

Im Rahmen der Abformung der Implantatpositionen werden Abformeinrichtungen, auch bezeichnet als Abformpfosten, verwendet, mit denen anhand der implantierten Dentalimplantate eine Negativform erhalten werden kann, in der die Position eines jeden Dentalimplantats abgeformt ist. Beim Abformen wird eine Abformmasse an Abformkappen von an bestehende Dentalimplantate angesetzten Abformeinrichtungen angebracht, und nach Aushärten der Abformmasse wird die so erhaltene Negativform mit den in der Negativform verbleibenden Abformkappen von den Dentalimplantaten abgenommen. Anhand der Negativform kann dann zum Beispiel eine Prothese so individuell für einen Patienten gefertigt werden, dass die Prothese in bestimmungsgemäßer Weise an die bereits implantierten Dentalimplantate angesetzt werden kann.

Unterschiedliche Lösungen für solche Abformeinrichtungen sind bekannt.

Eine aus der EP 2 368 518 B1 bekannte Abformkappe für ein Dentalimplantat weist an einem Endbereich ein Konnektorelement auf, das zum Bereitstellen einer lösbaren Schnappverbindung zwischen der Abformkappe und einem Dentalimplantat ausgestaltet ist.

Ein aus der EP 2 213 259 A1 bekannter Abformpfosten für ein Dentalimplantat weist eine Abformkappe auf, die aus einer Innenhülse und einer die Innenhülse radial außen umgebenen Außenhülle zusammengesetzt ist. Die Außenhülse ist hierbei lösbar mit der Innenhülse verbunden.

Die EP 0 727 193 A1 beschreibt eine Abformeinrichtung, bei der eine Abformkappe über eine Innenhülse mit einem Dentalimplantat zu verbinden ist.

Die US 6 213 773 B1 zeigt eine Vorrichtung, bestehend aus einer Abdruckhalterung für Zahnimplantate mit einem nicht störenden, niedrigen Profil zur Herstellung zeitsparender und genauer, gleichzeitiger oberer und unterer Abdrücke bei vollständig geschlossenem Mund und genau positioniertem Kiefer in Ruhestellung. Ein Abdruckpfosten mit niedrigem Profil rastet ein und hält sicher in einem selbsthärtenden elastomeren Abdruckmaterial, beeinträchtigt jedoch nicht die gleichzeitige Aufnahme eines oberen und unteren Elastomerabdrucks des exakt interdigitalen Kiefers mit einem "Dreifachlöffel".

Die US 5 882 200 A zeigt eine Verbindungsanordnung für ein Dentalimplantat und ein zugehöriges konisches Sekundärteil, die zur Abdrucknahme, zur Herstellung des Meistermodells oder zur Befestigung einer Suprakonstruktion auf dem im Kieferknochen eingesetzten Implantat verwendet werden kann.

Die CN 204 364 149 U zeigt eine abgewinkelte Abdruckübertragungsvorrichtung mit einem Gummistopfen. Die abgewinkelte Abdruckübertragungsvorrichtung wird für die Übertragung eines Implantats verwendet und umfasst einen Abdruckübertragungssitz, eine Abdruckübertragungssäule, eine Verbindungsschraube und den Stopfen.

Dentalimplantate werden im Rahmen eines chirurgischen Eingriffs so in Knochenstrukturen eines Patienten integriert, dass sie einen festen Halt im Knochen finden. Achsen der Dentalimplantate können hierbei voneinander abweichen, was das Anbringen zum Beispiel einer Prothese erschweren, zudem aber auch das Abformen über Abformeinrichtungen beeinträchtigen kann. So ist beim Abformen insbesondere sicherzustellen, dass es aufgrund des Trennens der (in der ausgehärteten Abformmasse verbleibenden) Abformkappen von den Dentalimplantaten zu keinen übermäßigen Verspannungen in der Abformmasse oder an den Dentalimplantaten kommt, um eine Beschädigung an den Dentalimplantaten, am Zahnfleisch oder an der erhaltenen Negativform zu vermeiden.

Aufgabe der vorliegenden Erfindung ist es, eine Abformeinrichtung zur Verfügung zu stellen, die in einfacher Weise ein Abformen von implantierten Dentalimplantaten bei günstiger Trennung der Abformkappe von einem zugeordneten Dentalimplantat ermöglicht und dabei einfach herzustellen ist.

Diese Aufgabe wird durch einen Gegenstand mit den Merkmalen des Anspruchs 1 gelöst.

Demnach weist die Abformeinrichtung ein Abformabutment mit einem Abutmentkörper auf, der an einer ersten Seite eine an das Dentalimplantat anzusetzende Stirnfläche und an einer entlang der Längsachse von der ersten Seite abliegenden, zweiten Seite einen zweiten Verbindungsabschnitt zum Verbinden mit dem ersten Verbindungsabschnitt der Abformkappe aufweist. Das Abformabutment weist eine entlang der Längsachse erstreckte, zweite Verbindungsöffnung auf, die in einer angesetzten Stellung, in der das Abformabutment und die Abformkappe aneinander angesetzt sind, derart entlang der Längsachse mit der erste Verbindungsöffnung der Abformkappe fluchtet, dass das Konnektorelement durch die erste Verbindungsöffnung und die zweite Verbindungsöffnung zum Verbinden mit dem Dentalimplantat hindurchführbar ist. Der zweite Verbindungsabschnitt weist eine konische Form auf.

Die Abformeinrichtung ist somit dreigeteilt. So weist die Abformeinrichtung eine Abformkappe, ein Abformabutment und ein Konnektorelement zum gemeinsamen Festlegen der Abformkappe und des Abformabutments an einem zugeordneten Dentalimplantat auf. Die Abformkappe und das Abformabutment sind aneinander anzusetzen und sind gemeinsam an einem zugeordneten Dentalimplantat zu befestigen, indem das Konnektorelement durch die Verbindungsöffnungen der Abformkappe und des Abformabutments hindurchgeführt und mit dem Dentalimplantat verbunden wird, um auf diese Weise die Abformkappe und das Abformabutment an dem Dentalimplantat festzulegen.

Die Abformeinrichtung dient dazu, ein bereits implantiertes Dentalimplantat abzuformen. Sind mehrere Dentalimplantate in die Knochenstruktur des Kieferknochens eines Patienten implantiert, so wird an jedem Dentalimplantat eine Abformeinrichtung verwendet, die zum Abformen an das jeweilige Dentalimplantat angesetzt und über das Konnektorelement an dem zugeordneten Dentalimplantat befestigt wird. Zum Abformen wird eine Abformmasse dann so an den Abformeinrichtungen angebracht, dass die Abformkappen der Abformeinrichtungen von der Abformmasse umgeben sind und nach Aushärten der Abformmasse die so erhaltene Negativform gemeinsam mit den Abformkappen von den Dentalimplantaten abgenommen werden kann. Über die Abformkappen ist in der Negativform die Position und Ausrichtung der Dentalimplantate definiert, sodass anhand der Abformkappen zum Beispiel eine geeignete Prothese, Krone oder Brücke mit richtig positionierten und ausgerichteten Befestigungseinrichtungen gefertigt werden kann.

Zum Abnehmen der ausgehärteten Abformmasse werden die Abformkappen durch Lösen der Konnektorelemente von den Abformabutments getrennt derart, dass die Abformkappen von den an den Dentalimplantaten verbleibenden Abformabutments abgenommen werden können. Beim Abnehmen werden die Verbindungsabschnitte der Abformabutments einerseits und der Abformkappen andererseits hierbei voneinander abgenommen, sodass die Abformkappen in der Abformmasse und die Abformabutments an den Dentalimplantaten verbleiben.

Die Verbindungsabschnitte eines jeden Abformabutments und einer zugeordneten Abformkappe sind vorzugsweise derart geformt, dass die Abformkappe unter einem Winkel zu der Längsachse ungleich 0° von dem Abformabutment abgenommen werden kann. Dies ermöglicht, eine jede Abformkappe von dem zugeordneten Abformabutment spannungsfrei zu trennen, auch wenn die Implantatachsen mehrerer in den Kieferknochen eines Patienten implantierter Dentalimplantate nicht parallel zueinander ausgerichtet sind. Dadurch, dass die Abformkappen der Abformeinrichtungen spannungsfrei von den zugeordneten, an den Dentalimplantaten verbleibenden Abformabutments getrennt werden können, wird nach Aushärten insbesondere auf Seiten der Negativform, also auf Seiten der ausgehärteten Abformmasse, eine Beschädigung beim Abnehmen von den Dentalimplantaten vermieden.

Dadurch, dass die Abformabutments an den Dentalimplantaten verbleiben und erst nach Abnehmen der Negativform von den Dentalimplantaten getrennt werden, wird zudem auch das Risiko für eine Beschädigung auf Seiten der Dentalimplantate reduziert.

Zusätzlich kann beispielsweise auch das Zahnfleisch eines Patienten geschont werden, wenn die Abformabutments im Zahnfleisch (gingival) platziert sind, die Abformkappen aber nicht oder nur unwesentlich in das Zahnfleisch eingreifen. Das Abnehmen der Negativform von den Dentalimplantaten kann somit ohne Beeinträchtigung am Zahnfleisch erfolgen.

In einer Ausgestaltung ist der zweite Verbindungsabschnitt des Abformabutments unter einem Winkel ungleich 0° zu der Längsachse erstreckt. Der zweite Verbindungsabschnitt ist somit nicht parallel zur Längsachse gerichtet, sondern winklig. Beispielsweise kann der zweite Verbindungsabschnitt in einem Winkel zwischen 30° und 90° zu der Längsachse angeordnet sein. Alternativ ist der zweite Verbindungsabschnitt mit einem Winkel von 90° zur Längsachse angeordnet und erstreckt sich somit im Wesentlichen entlang einer senkrecht zur Längsachse erstreckten Ebene stirnseitig an dem Abutmentkörper des Abformabutments.

Der zweite Verbindungabschnitt kann eine (zur Längsachse) rotationssymmetrische Grundform aufweisen. Beispielsweise kann der zweite Verbindungsabschnitt eine konische Form aufweisen, indem er beispielsweise als Kegelstumpf geformt ist, mit einem Konuswinkel zum Beispiel zwischen 30° und 60°, beispielsweise 45°.

Ist der zweite Verbindungsabschnitt als Kegelstumpf geformt, so bildet der zweite Verbindungsabschnitt einen Eingriffsstumpf nach Art einer Patrize zum Eingreifen in den zugeordneten ersten Verbindungsabschnitt der Abformkappe aus. In diesem Fall kann der erste Verbindungsabschnitt beispielsweise nach Art einer Matrize als Eingriffsaussparung für den Eingriffsstrumpf des zweiten Verbindungsabschnitts ausgebildet sein.

In einer Ausgestaltung ist der erste Verbindungsabschnitt der Abformkappe komplementär zu dem zweiten Verbindungsabschnitt des Abutmentkörpers des Abformabutments ausgebildet. Ist der zweite Verbindungsabschnitt des Abformabutments somit beispielsweise konisch nach Art eines Kegelstumpfs geformt, so weist der erste Verbindungsabschnitt der Abformkappe eine komplementäre Form nach Art einer konischen Eingriffsöffnung als Eingriff für den zweiten Verbindungsabschnitt auf.

Dadurch, dass der zweite Verbindungsabschnitt des Abformabutments - und in komplementärer Weise der erste Verbindungsabschnitt der Abformkappe - unter einem Winkel zur Längsachse der Abformeinrichtung erstreckt sind, beispielsweise durch konische Formgebung des zweiten Verbindungsabschnitts und des zugeordneten ersten Verbindungsabschnitts, wird ermöglicht, die Abformkappe unter einem Winkel ungleich 0° von dem Abformabutment abzunehmen. So können die Abformkappen von Abformeinrichtungen an Dentalimplantaten, deren Implantatachsen voneinander abweichen und insbesondere nicht parallel zueinander erstreckt sind, gemeinsam in verspannungsfreier Weise von den zugeordneten Abformabutments abgenommen werden, sodass das Risiko einer Verspannung an der durch die ausgehärtete Abformmasse erhaltenen Negativform - die ansonsten zu einer Beeinträchtigung der Exaktheit der Positionierung der Abformkappen zum Anzeigen der Orte und Ausrichtungen der Dentalimplantate führen könnte - vermieden wird.

In einer Ausgestaltung weist der zweite Verbindungsabschnitt zumindest ein Formschlusselement zum drehfesten Verbinden des Abformabutments mit der Abformkappe in der angesetzten Stellung auf. In der angesetzten Stellung liegen die Verbindungsabschnitte des Abformabutments und der Abformkappe aneinander an. Über ein oder mehrere Formschlusselemente sind das Abformabutment und die Abformkappe hierbei in angesetzter Stellung drehfest, mit Bezug auf die Längsachse der Abformeinrichtung, zueinander festgelegt, sodass die rotatorische Position des Abformabutments und der Abformkappe zueinander gesichert ist.

Beispielsweise können an dem Verbindungsabschnitt des Abformabutments mehrere Formschlusselemente geformt sein, die umfänglich um die Längsachse gleichverteilt zueinander beabstandet und somit regelmäßig zueinander angeordnet sind.

Solche Formschlusselemente können beispielsweise durch radial zur Längsachse erstreckte Stege ausgebildet sein. An dem ersten Verbindungsabschnitt der Abformkappe sind hierbei komplementäre Formschlusselemente vorgesehen, beispielsweise in Form von Nuten.

In einer anderen Ausgestaltung kann an den Verbindungsabschnitten jeweils eine umfänglich um die Längsachse erstreckte Verzahnung mit radial zur Längsachse erstreckten Zahnspitzen und Zahntälern geformt sein, wobei die Verzahnungen in der angesetzten Stellung des Abformabutments und der Abformkappe formschlüssig ineinander eingreifen, sodass das Abformabutment und die Abformkappe drehfest um die Längsachse zueinander festgelegt sind.

In der angesetzten Stellung sind das Abformabutment und die Abformkappe über das Konnektorelement zueinander verspannt und somit zueinander festgelegt. Das Konnektorelement ist hierbei mit dem Dentalimplantat verbunden. Durch Lösen des Konnektorelements von den Dentalimplantaten können das Abformabutment und die Abformkappe voneinander freigegeben werden, sodass die Abformkappe von dem Abformabutment abgenommen werden kann.

Der zweite Verbindungsabschnitt des Abformabutments ist an der dem Dentalimplantat abgewandten, zweiten Seite des Abutmentkörpers geformt und somit stirnseitig an der von dem Dentalimplantat abliegenden Seite angebracht. Über die erste Seite kann das Abformabutment demgegenüber an das zugeordnete Dentalimplantat angesetzt und mit dem Dentalimplantat verbunden werden, um die Abformeinrichtung an dem Dentalimplantat festzulegen.

In einer Ausgestaltung weist das Abformabutment einen Schaft auf, der an der ersten Seite entlang der Längsachse von dem Abutmentörper vorsteht und in eine Stecköffnung des Dentalimplantats eingesteckt werden kann. Über den Schaft kann somit eine steckende Verbindung zwischen dem Abformabutment und dem zugeordneten Dentalimplantat hergestellt werden, wobei der Schaft beispielsweise drehsicher in der zugeordneten Stecköffnung des Dentalimplantats gehalten werden kann, um das Abformabutment drehsicher an dem Dentalimplantat anzubringen.

Beispielsweise können an dem Schaft ein oder mehrere Drehsicherungselemente, zum Beispiel in Form von parallel zur Längsachse erstreckten Stegen, geformt sein, die in zugeordnete, komplementäre Drehsicherungselemente an einer die Stecköffnung des Dentalimplantats umgebenden Wandung eingreifen und somit eine drehsichere Verbindung zwischen dem Abformabutment und dem Dentalimplantat schaffen. Ist die Abformkappe von dem Abformabutment abgenommen worden, kann das Abformabutment in einfacher Weise von dem Dentalimplantat abgezogen werden, indem der von dem Abformkörper vorstehende Schaft aus der Stecköffnung des Dentalimplantats entfernt wird.

Das Konnektorelement kann beispielsweise als Schraubelement mit einem mit dem Dentalimplantat schraubend zu verbindenden Schraubende ausgebildet sein. Zum Abformen wird die Abformeinrichtung mit dem Abformabutment und der Abformkappe an ein Dentalimplantat angesetzt und über das Konnektorelement an dem Dentalimplantat befestigt, indem das Konnektorelement durch die Verbindungsöffnungen des Abformabutments und der Abformkappe hindurchgeführt und mit seinem Schraubende in eine zugeordnete Schrauböffnung des Dentalimplantats eingeschraubt wird. Auf diese Weise werden das Abformabutment und die Abformkappe zueinander verspannt und an dem Dentalimplantat festgelegt. Nach Anbringen einer Abformmasse an der Abformkappe kann das Konnektorelement durch Herausschrauben aus dem Dentalimplantat gelöst werden, sodass die aus der ausgehärteten Abformmasse erhaltene Negativform gemeinsam mit der Abformkappe von dem Dentalimplantat abgenommen werden kann, wobei das Abformabutment zunächst an dem Dentalimplantat verbleibt und nach Abnehmen der Negativform von dem jeweiligen Dentalimplantat entfernt werden kann.

Das Abformabutment und die Abformkappe können beispielsweise jeweils aus einem Metallmaterial, insbesondere einem Titanmaterial geformt sein. Dies ermöglicht beispielsweise eine mehrfache Verwendung der Abformeinrichtung mit dem Abformabutment und der Abformkappe.

Alternativ ist jedoch auch denkbar, das Abformabutment und/oder die Abformkappe aus einem anderen Material, zum Beispiel einem Kunststoffmaterial zu fertigen, wobei in diesem Fall die Abformeinrichtung beispielsweise für eine Ein-Weg-Verwendung ausgestaltet sein kann.

Die Erfindung soll nachfolgend anhand der in den Figuren dargestellten Ausführungsbeispiele näher erläutert werden. Es zeigen:
- Fig. 1: eine schematische Ansicht von Abformeinrichtungen an Dentalimplantaten an einer Knochenstruktur eines Patienten;
- Fig. 2: eine Ansicht einer Abformeinrichtung an einem Dentalimplantat;
- Fig. 3: eine teilweise geschnittene Ansicht der Anordnung gemäß Fig. 2;
- Fig. 4: eine gesonderte Ansicht eines Abformabutments der Abformeinrichtung;
- Fig. 5: eine teilweise geschnittene Ansicht des Abformabutments;
- Fig. 6: eine Schnittansicht durch einen Schaft des Abformabutments;
- Fig. 7: eine schematische Ansicht eines Dentalimplantats;
- Fig. 8: eine Draufsicht auf das Dentalimplantat; und
- Fig. 9: eine schematische Ansicht einer Abformeinrichtung nach Anbringen einer Abformmasse.

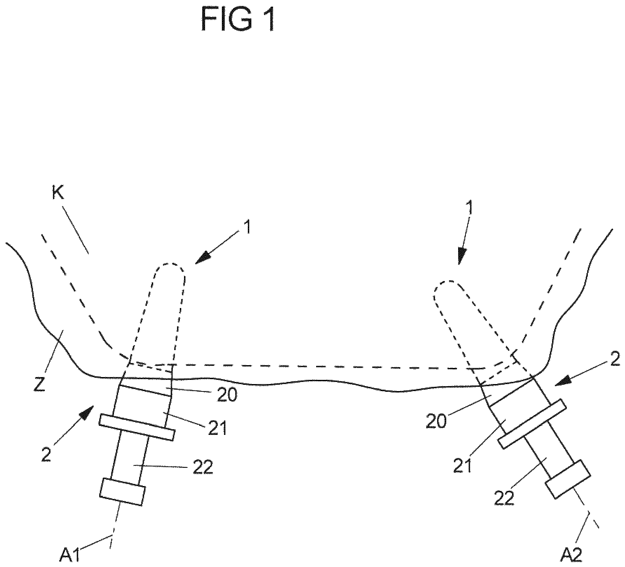

Fig. 1 zeigt in einer schematischen Ansicht eine Knochenstruktur K eines Kieferknochens eines Patienten, in den Dentalimplantate 1 zum lösbaren Befestigen zum Beispiel einer Prothese, einer Krone oder Brücke implantiert sind.

Generell werden zum Bereitstellen zum Beispiel einer Prothese zunächst Dentalimplantate 1 in den Kieferknochen eines Patienten implantiert, um sodann, nach der Implantation, die Dentalimplantate 1 abzuformen und anhand einer so erhaltenen Negativform die Prothese zu fertigen. Die Prothese wird dabei insbesondere anhand der tatsächlichen Positionierung und Ausrichtung der Dentalimplantate 1 hergestellt, sodass die Prothese in bestimmungsgemäßer Weise an die implantierten Dentalimplantate 1 angesetzt und an den Dentalimplantaten 1 fixiert werden kann.

Zum Abformen werden Abformeinrichtungen 2 verwendet, die - bei dem dargestellten Ausführungsbeispiel - aus einem an das jeweilige Dentalimplantat 1 angesetzten Abformabutment 20, einer Abformkappe 21 und einem die Abformkappe 21 und das Abformabutment 20 mit dem Dentalimplantat 1 verbindenden Konnektorelement 22 in Form einer Schraube besteht. An jedem Dentalimplantat 1 ist hierbei eine Abformeinrichtung 2 angeordnet, sodass eine Abformmasse A zum Erhalten einer Negativform an den Abformeinrichtungen 2, insbesondere den Abformkappen 21 der Abformeinrichtungen 2, angebracht werden kann und über die Abformeinrichtungen 2 somit die Position und Ausrichtung eines jeden Dentalimplantats 1 in der Negativform angezeigt werden kann.

Wie aus Fig. 1 ersichtlich, können Dentalimplantate 1 mit erheblich voneinander abweichenden Implantatachsen A1, A2 in die Knochenstruktur K eines Kieferknochens implantiert sein. Vor diesem Hintergrund ist wünschenswert, trotz bestehender Abweichungen in den Implantatachsen von Dentalimplantaten ein möglichst spannungsfreies Trennen der Abformkappe 21 von dem jeweiligen Dentalimplantat 1 zu ermöglichen, um ein einfaches, exaktes Abformen zu erlauben.

Dies wird bei der hier vorgeschlagenen Abformeinrichtung 2 dadurch erreicht, dass die Abformkappe 21 von dem Abformabutment 20 funktional separiert ist und die Abformeinrichtung 2 - mit dem Abformabutment 20, der Abformkappe 21 und dem Konnektorelement 22 - somit dreiteilig ausgebildet ist. Die Abformkappe 21 wird hierbei nicht unmittelbar an das Dentalimplantat 1 angesetzt, sondern unter Zwischenlage des Abformabutments 20 derart, dass das Abformabutment 20 mit dem Dentalimplantat 1 verbunden wird und die Abformkappe 21 an dem Abformabutment 20 anliegt.

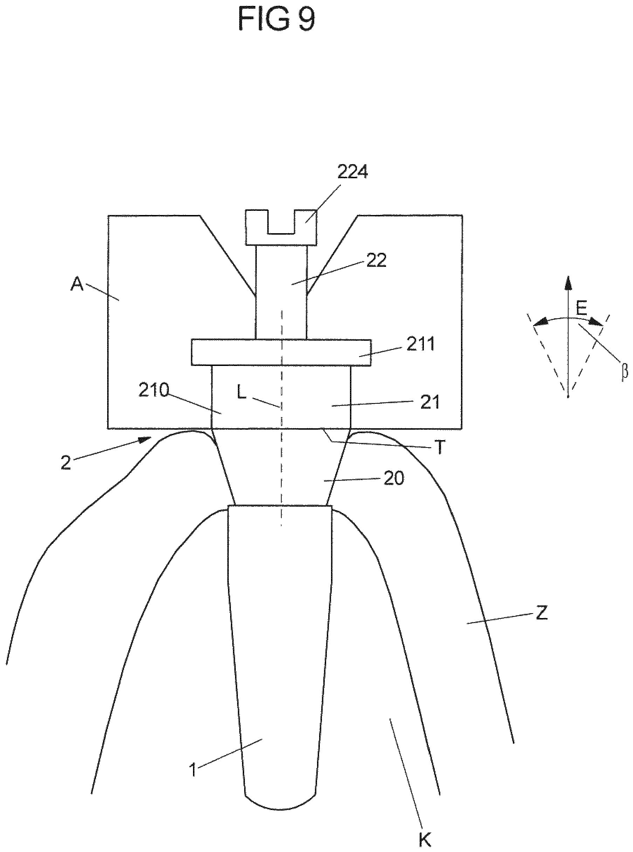

Beim Abformen wird die Abformmasse A insbesondere um die Abformkappen 21 der Abformeinrichtungen 2 gelegt, sodass die Abformkappen 21 in der Abformmasse A aufgenommen werden, wie dies aus Fig. 9 ersichtlich ist. Die Abformkappen 21 weisen hierbei jeweils einen Körper 210 mit einem an einer dem Abformabutment 20 abgewandten Seite radial vorstehenden Bundabschnitt 211 auf, über den eine feste, formschlüssige Verbindung zwischen einer jeden Abformkappe 21 und der Abformmasse A geschaffen wird.

Beim Anbringen der Abformmasse A bleibt das Konnektorelement 22 (gegebenenfalls unter Entfernen eines sogenannten Löffels) einer jeden Abformeinrichtung 2 von außen zugänglich derart, dass nach Aushärten der Abformmasse A die Konnektorelemente 22 der Abformeinrichtungen 1 gelöst werden können und die ausgehärtete Abformmasse A somit zusammen mit den Abformkappen 21 entlang einer Entnahmerichtung E von den Abformabutments 20 und damit von den Dentalimplantaten 1 abgenommen werden kann.

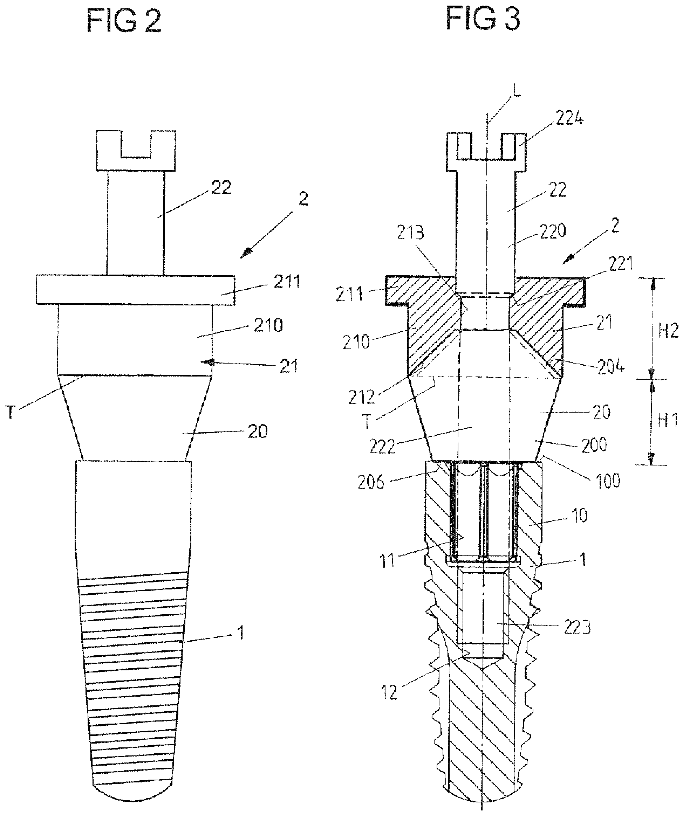

Wie aus einer Zusammenschau von Fig. 2 bis 5 ersichtlich, weist das Abformabutment 20 einer jeden Abformeinrichtung 2, an einer von dem Dentalimplantat 1 abgewandten Seite eines Abutmentkörpers 200, einen konischen Verbindungsabschnitt 204 in Form eines Kegelstumpfes auf, an dem, bei angesetzter Abformkappe 21, ein zugeordneter, komplementär Verbindungsabschnitt 212 in Form einer konischen Eingriffsaussparung der Abformkappe 21 zu liegen kommt.

Der Konuswinkel α des Verbindungsabschnitts 204 (und entsprechend der komplementäre Konuswinkel des Verbindungsabschnitts 212 der Abformkappe 21) kann beispielsweise in einem Bereich zwischen 30 ° und 60°, beispielsweise bei 45°, liegen.

Denkbar und möglich ist aber auch, die Verbindungsabschnitte entlang einer senkrecht zur Längsachse L erstreckten Ebene auszugestalten und somit nicht konisch, sondern im Wesentlichen flach zu formen.

An dem Verbindungsabschnitt 204 des Abformabutments 20 sind Formschlusselemente 205 in Form von erhabenen Keilabschnitten geformt, die durch radial zu einer Längsachse L erstreckte, nutförmige Vertiefungen voneinander getrennt sind. An dem Verbindungsabschnitt 212 innenseitig der Abformkappe 21 sind komplementäre Formschlusselemente geformt, sodass durch Eingriff der Formschlusselemente 205 des Abformabutments 20 in die komplementären Formschlusselemente an dem Verbindungsabschnitt 212 der Abformkappe 21 das Abformabutment 20 und die Abformkappe 21 in einer aneinander angesetzten Stellung drehfest zueinander festgelegt sind.

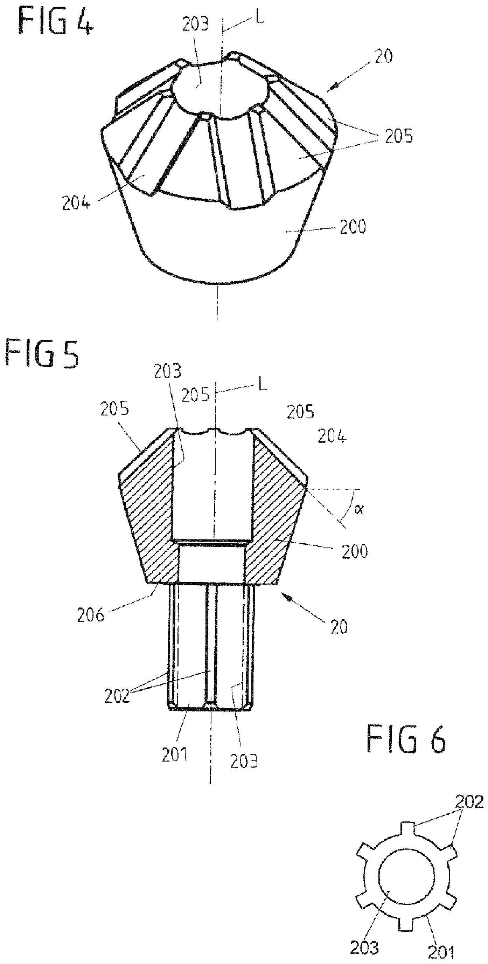

Entlang der Längsachse L steht von dem Abutmentkörper 200 ein Schaft 201 vor, der steckend in eine zugeordnete Stecköffnung 11 des Dentalimplantats 1 eingesteckt werden kann, wie dies aus einer Zusammenschau von Fig. 5 bis 8 ersichtlich ist. Der Schaft 201 erstreckt sich axial entlang der Längsachse L und steht derart von dem Abutmentkörper 200 vor, dass der Schaft 201 in einer mit dem Dentalimplantat 1 verbundenen Stellung in die Stecköffnung 11 eingreift und dabei eine Stirnfläche 206 an einer dem Verbindungsabschnitt 204 abgewandten Seite des Abutmentkörpers 200 an einer zugeordneten Anlagefläche 100 stirnseitig des Dentalimplantats 1 zu liegen kommt, wie dies insbesondere aus Fig. 2 und 3 ersichtlich ist.

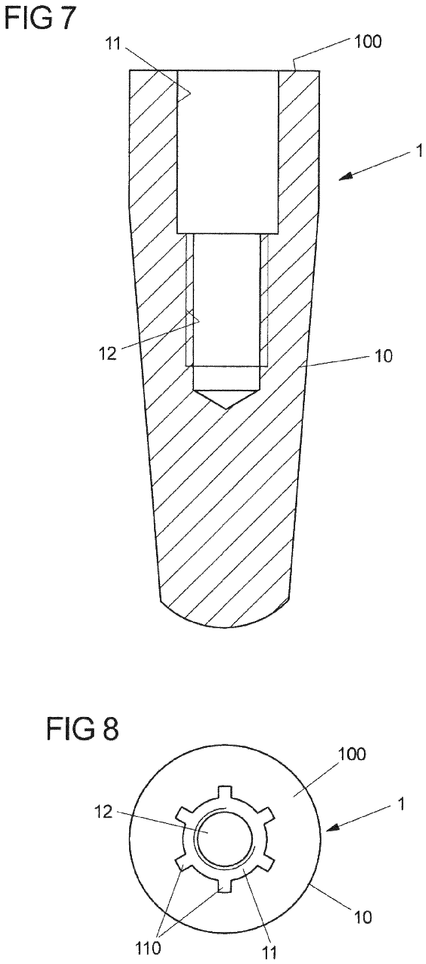

Der Schaft 201 weist, an seiner außenseitigen Mantelfläche, Drehsicherungselemente 202 in Form von parallel zur Längsachse L erstreckten Stegen auf, die zur drehgesicherten Verbindung des Abformabutments 20 mit dem Dentalimplantat 1 in zugeordnete Drehsicherungselemente 110 in Form von nutförmigen Vertiefungen an einer die Stecköffnung 11 umgebenden Wandung des Dentalimplantats 1 eingreifen, wie dies aus Fig. 6 (die den Schaft 201 im Querschnitt darstellt) in Zusammenschau mit Fig. 8 (die eine Draufsicht auf das Dentalimplantat 1 darstellt) ersichtlich ist.

Zum Befestigen der Abformeinrichtung 2 an einem zugeordneten Dentalimplantat 1 wird das Abformabutment 20 gemeinsam mit der Abformkappe 21 an das Dentalimplantat 1 angesetzt. Sodann wird das Konnektorelement 22 mit Schaftabschnitten 220, 222 durch entlang der Längsachse L erstreckte, miteinander fluchtende Verbindungsöffnungen 203, 213 der Abformkappe 21 und des Abformabutments 20 hindurchgeführt und über ein Schraubende 223 an dem Schaftabschnitt 222 in eine zugeordnete Schrauböffnung 12 innerhalb des Dentalimplantats 1 eingeschraubt. Über eine zwischen den Schaftabschnitten 220, 222 gebildete Stufe 221 werden hierdurch die Abformkappe 21 und das Abformabutment 20 zueinander und zu dem Dentalimplantat 1 festgelegt.

Das Abformabutment 20 ist derart geformt, dass es bei Ansetzen an ein zugeordnetes Dentalimplantat 1 im Wesentlichen im Zahnfleisch Z eines Patienten aufgenommen werden kann, wie dies beispielsweise aus Fig. 9 ersichtlich ist. Entsprechend kann die Höhe H 1 (siehe Fig. 3) des Abformabutments 20 so dimensioniert sein, dass eine Trennlinie T zwischen dem Abformabutment 20 und der Abformkappe 21 bei üblichen Verhältnissen in etwa auf Höhe der Zahnfleischaußenseite zu liegen kommt.

Die Abformkappe 21 soll demgegenüber von der Abformmasse A umgeben werden und nach Aushärten der Abformmasse A in der so erhaltenen Negativform verbleiben. Die Höhe H2 der Abformkappe 21 ist für einen sicheren Halt in der Abformmasse A angepasst und kann beispielsweise auch deutlich größer als in Fig. 2 und 3 dargestellt ausgebildet sein.

Zum Abnehmen der ausgehärteten Abformmasse A kann ein Nutzer auf den Kopf 224 des Konnektorelements 22 einer jeden Abformeinrichtung 2 zugreifen, um die Schraubverbindung zu lösen und dadurch ein Trennen der Abformkappe 21 von dem jeweiligen Abformabutment 20 zu ermöglichen.

Dadurch, dass die Verbindungsabschnitte 204, 212 winklig zur Längsachse L der Abformeinrichtung 2 geformt sind, können die Abformkappe 21 und das Abformabutment 20 verspannungsfrei voneinander abgenommen werden, auch wenn die Entnahmerichtung E - beispielsweise bei nicht parallel zueinander ausgerichteten Implantatachsen A1, A2, wie bei dem Beispiel gemäß Fig. 1 - innerhalb eines Winkelkonus β (siehe Fig. 9) von der Längsachse L der Abformeinrichtung 2 abweicht.

Dadurch, dass das Abformabutment 20 beim Abnehmen der Abformkappe 21 an dem Dentalimplantat 1 verbleibt, wird eine Beschädigung insbesondere im Bereich des Zahnfleisches Z und zudem am Dentalimplantat 1 bei Abnehmen der ausgehärteten Abformmasse A vermieden. Ein jedes Abformabutment 20 kann nach Abnehmen der ausgehärteten Abformmasse A in schonender Weise von dem jeweiligen Dentalimplantat 1 entfernt werden, unter Herausziehen des Schafts 201 aus der Stecköffnung 11 des zugeordneten Dentalimplantats 1.

Der der Erfindung zugrunde liegende Gedanke ist nicht auf die vorangehend geschilderten Ausführungsbeispiele beschränkt, sondern lässt sich auch bei gänzlich anders gearteten Ausführungsformen verwirklichen.

Eine Abformeinrichtung der hier beschriebenen Art kann allgemein für einen Zahnersatz bei zahnlosen Patienten eingesetzt werden, aber auch für andere implantatversorgte Situationen in der kieferorthopädischen Behandlung. Eine Abformung kann in diesem Zusammenhang nicht nur zur Fertigung einer Prothese, sondern auch für Einzelzahnsituationen (Kronen) und Versorgungen ab zwei Implantaten (Brücken) dienen.

### Bezugszeichenliste

- 1: Dentalimplantat
- 10: Implantatkörper
- 100: Anlagefläche
- 11: Stecköffnung
- 110: Drehsicherungselement
- 12: Schrauböffnung
- 2: Abformeinrichtung
- 20: Abformabutment
- 200: Abutmentkörper
- 201: Schaft
- 202: Drehsicherungselement
- 203: Verbindungsöffnung
- 204: Verbindungsabschnitt
- 205: Formschlusselement
- 206: Stirnfläche
- 21: Abformkappe
- 210: Körper
- 211: Bundabschnitt
- 212: Verbindungsabschnitt
- 213: Verbindungsöffnung
- 22: Konnektorelement
- 220: Schaftabschnitt
- 221: Stufe
- 222: Schaftabschnitt
- 223: Schraubende
- 224: Kopf
- A: Abformmasse
- A1, A2: Implantatachse
- α: Winkel
- β: Winkel
- E: Entnahmerichtung
- K: Knochenstruktur
- L: Längsachse
- T: Trennlinie
- Z: Zahnfleisch

## Patentansprüche

1. Abformeinrichtung (2) für ein Dentalimplantat (1), mit einer Abformkappe (21), die eine entlang einer Längsachse (L) erstreckte, erste Verbindungsöffnung (213) und einen ersten Verbindungabschnitt (212) aufweist, und einem Konnektorelement (22) zum Festlegen der Abformkappe (21) relativ zu dem Dentalimplantat (1), und einem Abformabutment (20) mit einem Abutmentkörper (200), der an einer ersten Seite eine an das Dentalimplantat (1) anzusetzende Stirnfläche (206) und an einer entlang der Längsachse (L) von der ersten Seite abliegenden, zweiten Seite einen zweiten Verbindungsabschnitt (204) zum Verbinden mit dem ersten Verbindungsabschnitt (212) der Abformkappe (2) aufweist, wobei das Abformabutment (20) eine entlang der Längsachse (L) erstreckte, zweite Verbindungsöffnung (203) aufweist, die in einer angesetzten Stellung, in der das Abformabutment (20) und die Abformkappe (21) aneinander angesetzt sind, derart entlang der Längsachse (L) mit der ersten Verbindungsöffnung (213) der Abformkappe (21) fluchtet, dass das Konnektorelement (22) durch die erste Verbindungsöffnung (212) und die zweite Verbindungsöffnung (203) zum Verbinden mit dem Dentalimplantat (1) hindurch führbar ist, **dadurch gekennzeichnet, dass** der zweite Verbindungsabschnitt (204) eine konische Form aufweist.

2. Abformeinrichtung (2) nach Anspruch 1 , **dadurch gekennzeichnet, dass** die Abformkappe (21) unter einem Winkel (β) zu der Längsachse (L) ungleich 0° von dem Abformabutment (20) abnehmbar ist.

3. Abformeinrichtung (2) nach Anspruch 1 oder 2, **dadurch gekennzeichnet, dass** der zweite Verbindungsabschnitt (204) unter einem Winkel (α) ungleich 0° zu der Längsachse (L) erstreckt ist.

4. Abformeinrichtung (2) nach einem der vorangehenden Ansprüche, **dadurch gekennzeichnet, dass** der zweite Verbindungsabschnitt (204) die Form eines Kegelstumpfs aufweist.

5. Abformeinrichtung (2) nach einem der vorangehenden Ansprüche, **dadurch gekennzeichnet, dass** der erste Verbindungsabschnitt (212) komplementär zu dem zweiten Verbindungsabschnitt (204) geformt ist.

6. Abformeinrichtung (2) nach einem der vorangehenden Ansprüche, **dadurch gekennzeichnet, dass** der zweite Verbindungsabschnitt (204) zumindest ein Formschlusselement (202) zum drehfesten Verbinden des Abformabutments mit der Abformkappe (21) in der angesetzten Stellung aufweist.

7. Abformeinrichtung (2) nach Anspruch 6, **dadurch gekennzeichnet, dass** der zweite Verbindungsabschnitt (204) ein Mehrzahl von um die Längsachse (L) regelmäßig zueinander angeordneten Formschlusselementen (202) aufweist.

8. Abformeinrichtung (2) nach einem der vorangehenden Ansprüche, **dadurch gekennzeichnet, dass** das Abformabutment (20) einen Schaft (201) aufweist, der an der ersten Seite entlang der Längsachse (L) von dem Abutmentkörper (200) vorsteht und in eine Stecköffnung des Dentalimplantats (1) einsetzbar ist.

9. Abformeinrichtung (2) nach Anspruch 8, **dadurch gekennzeichnet, dass** der Schaft (201) zumindest ein Drehsicherungselement (202) zum drehfesten Verbinden mit dem Dentalimplantat (1) aufweist.

10. Abformeinrichtung (2) nach einem der vorangehenden Ansprüche, **dadurch gekennzeichnet, dass** das Konnektorelement (22) ein mit dem Dentalimplantat (1) schraubend zu verbindendes Schraubenende (223) aufweist.

## Claims

1. Impression device (2) for a dental implant (1), comprising an impression cap (21) which has a first connection opening (213) extending along a longitudinal axis (L) and a first connecting portion (212), and comprising a connector element (22) for fixing the impression cap (21) relative to the dental implant (1), and an impression abutment (20) having an abutment body (200), which, on a first side, has an end face (206) to be attached to the dental implant (1), and, on a second side located along the longitudinal axis (L) from the first side, has a second connecting portion (204) for connection to the first connecting portion (212) of the impression cap (2), the impression abutment (20) having a second connection opening (203) which extends along the longitudinal axis (L) and which, in an attached position in which the impression abutment (20) and the impression cap (21) are attached to one another, is aligned with the first connection opening (213) of the impression cap (21) along the longitudinal axis (L) in such a way that the connector element (22) can be guided through the first connection opening (212) and the second connection opening (203) for connection to the dental implant (1), **characterized in that** the second connecting portion (204) has a conical shape.

2. Impression device (2) according to claim 1, **characterized in that** the impression cap (21) can be removed from the impression abutment (20) at an angle (β) to the longitudinal axis (L) that is not equal to 0°.

3. Impression device (2) according to either claim 1 or claim 2, **characterized in that** the second connecting portion (204) extends at an angle (α) to the longitudinal axis (L) that is not equal to 0°.

4. Impression device (2) according to any of the preceding claims, **characterized in that** the second connecting portion (204) has the shape of a truncated cone.

5. Impression device (2) according to any of the preceding claims, **characterized in that** the first connecting portion (212) is shaped so as to be complementary to the second connecting portion (204).

6. Impression device (2) according to any of the preceding claims, **characterized in that** the second connecting portion (204) has at least one form-fitting element (202) for connecting the impression abutment to the impression cap (21) in a rotationally fixed manner in the attached position.

7. Impression device (2) according to claim 6, **characterized in that** the second connecting portion (204) has a plurality of form-fitting elements (202) which are arranged regularly with respect to one another about the longitudinal axis (L).

8. Impression device (2) according to any of the preceding claims, **characterized in that** the impression body (20) has a shaft (201) which projects from the abutment body (200) along the longitudinal axis (L) on the first side and can be inserted into a plug-in opening of the dental implant (1).

9. Impression device (2) according to claim 8, **characterized in that** the shaft (201) has at least one anti-rotation element (202) for rotationally fixed connection to the dental implant (1).

10. Impression device (2) according to any of the preceding claims, **characterized in that** the connector element (22) has a screw end (223) which is to be screwed to the dental implant (1).

## Revendications

1. Dispositif d'empreinte (2) pour un implant dentaire (1), comportant une coiffe d'empreinte (21) qui présente une première ouverture de liaison (213) s'étendant le long d'un axe longitudinal (L) et une première section de liaison (212), et un élément connecteur (22) pour la fixation de la coiffe d'empreinte (21) par rapport à l'implant dentaire (1), et un pilier d'empreinte (20) comportant un corps de pilier (200) qui présente, sur une première face, une surface frontale (206) à appliquer sur l'implant dentaire (1) et, sur une seconde face éloignée de la première face le long de l'axe longitudinal (L), une seconde section de liaison (204) pour la liaison à la première section de liaison (212) de la coiffe d'empreinte (2), le pilier d'empreinte (20) présentant une seconde ouverture de liaison (203) s'étendant le long de l'axe longitudinal (L), laquelle, dans une position appliquée dans laquelle le pilier d'empreinte (20) et la coiffe d'empreinte (21) sont appliqués l'un sur l'autre, est en affleurement avec la première ouverture de liaison (213) de la coiffe d'empreinte (21) le long de l'axe longitudinal (L) de telle sorte que l'élément connecteur (22) peut être guidé à travers la première ouverture de liaison (212) et la seconde ouverture de liaison (203) pour la liaison à l'implant dentaire (1), **caractérisé en ce que** la seconde section de liaison (204) présente une forme conique.

2. Dispositif d'empreinte (2) selon la revendication 1, **caractérisé en ce que** la coiffe d'empreinte (21) peut être retirée du pilier d'empreinte (20) selon un angle (β) différent de 0° par rapport à l'axe longitudinal (L).

3. Dispositif d'empreinte (2) selon la revendication 1 ou 2,
**caractérisé en ce que** la seconde section de liaison (204) s'étend selon un angle (α) différent de 0° par rapport à l'axe longitudinal (L).

4. Dispositif d'empreinte (2) selon l'une des revendications précédentes, **caractérisé en ce que** la seconde section de liaison (204) présente la forme d'un cône tronqué.

5. Dispositif d'empreinte (2) selon l'une des revendications précédentes, **caractérisé en ce que** la première section de liaison (212) est formée de manière complémentaire à la seconde section de liaison (204).

6. Dispositif d'empreinte (2) selon l'une des revendications précédentes, **caractérisé en ce que** la seconde section de liaison (204) présente au moins un élément de liaison par complémentarité de forme (202) permettant de relier de manière solidaire en rotation le pilier d'empreinte à la coiffe d'empreinte (21) dans la position appliquée.

7. Dispositif d'empreinte (2) selon la revendication 6,
**caractérisé en ce que** la seconde section de liaison (204) présente une pluralité d'éléments de liaison par complémentarité de forme (202) disposés de manière régulière les uns par rapport aux autres autour de l'axe longitudinal (L).

8. Dispositif d'empreinte (2) selon l'une des revendications précédentes, **caractérisé en ce que** le pilier d'empreinte (20) présente une tige (201) qui fait saillie au niveau de la première face le long de l'axe longitudinal (L) à partir du corps de pilier (200) et qui peut être insérée dans une ouverture d'emboîtement de l'implant dentaire (1).

9. Dispositif d'empreinte (2) selon la revendication 8, **caractérisé en ce que** la tige (201) présente au moins un élément de blocage en rotation (202) pour la liaison de manière solidaire en rotation à l'implant dentaire (1).

10. Dispositif d'empreinte (2) selon l'une des revendications précédentes, **caractérisé en ce que** l'élément connecteur (22) présente une extrémité de vis (223) destinée à être reliée par vissage à l'implant dentaire (1).
